# FASCICULE DE BREVET EUROPEEN

(11) **EP 3 663 989 B1**
(45) Date de publication et mention de la délivrance du brevet: **28.01.2026**
(21) Numéro de dépôt: 19211036.9
(22) Date de dépôt: 22.11.2019
(51) Int. Cl.: G06N 3/063, G06N 3/0464, G06T 1/60, G06F 5/08, G06F 7/544

(54) **PROCÉDÉ ET DISPOSITIF POUR RÉDUIRE LA CHARGE DE CALCUL D'UN MICROPROCESSEUR DESTINÉ À TRAITER DES DONNÉES PAR UN RÉSEAU DE NEURONES À CONVOLUTION**
VERFAHREN UND VORRICHTUNG ZUR REDUZIERUNG DER RECHENBELASTUNG EINES MIKROPROZESSORS ZUR DATENVERARBEITUNG DURCH EIN NEURONALES NETZ MIT KONVOLUTION
METHOD AND DEVICE FOR REDUCING THE CALCULATION LOAD OF A MICROPROCESSOR DESIGNED TO PROCESS DATA BY A CONVOLUTIONAL NEURAL NETWORK

(30) Priorité: 05.12.2018 FR 1872330
(43) Date de publication de la demande: 10.06.2020
(73) Titulaire: STMicroelectronics (Rousset) SAS, 13790 Rousset (FR)
(72) Inventeur: DEMAJ, Pierre, 06200 Nice (FR); FOLLIOT, Laurent, 06620 Gourdon (FR)
(74) Mandataire: Casalonga

(56) Documents cités:
- WO-A1-2018/200076
- US-A1- 2018 232 629
- JING CHANG ET AL: "An efficient implementation of 2D convolution in CNN", IEICE ELECTRONICS EXPRESS, vol. 14, no. 1, 1 January 2017 (2017-01-01), pages 20161134 - 20161134, XP55762161, DOI: 10.1587/elex.13.20161134

## Description

Des modes de mise en œuvre et de réalisation de l'invention concernent l'apprentissage approfondi (en anglais « deep learning »), notamment les réseaux de neurones profonds, et plus particulièrement la réduction de la charge de calcul d'une unité de calcul, par exemple un microprocesseur, traitant un ensemble initial de données par un réseau de neurones à convolution.

Les réseaux de neurones sont massivement utilisés pour résoudre divers problèmes statistiques notamment le problème de la classification de données.

Après une phase d'apprentissage automatique généralement supervisée, c'est-à-dire sur une base de données de référence déjà classifiées, un réseau de neurones « apprend » et devient tout seul capable d'appliquer la même classification à des données inconnues.

Les réseaux de neurones à convolution, ou CNN (« Convolutional Neural Networks » en anglais) sont un type de réseau de neurones dans lequel le motif de connexion entre les neurones est inspiré par le cortex visuel des animaux. Ils permettent avec efficacité la reconnaissance d'objets ou de personnes dans des images ou des vidéos. US 2018/232629 A1 (DU YUAN [US] ET AL) 16 août 2018 (2018-08-16) divulgue un procédé d'opération de mise en commun pour un réseau de neurones à convolution.

Un réseau de neurones convolutionnel contient généralement quatre types de couches traitant successivement l'information :
- la couche de convolution qui traite par exemple des blocs de l'image les uns après les autres ;
- la couche non-linéaire qui permet d'améliorer la pertinence du résultat ;
- la couche de mise en commun (appelée « pooling ») qui permet de regrouper plusieurs neurones en un seul neurone ;
- la couche entièrement connectée (appelée « fully-connected » ou couche dense) qui relie tous les neurones d'une couche à tous les neurones de la couche précédente.

Chaque couche prend en entrée des données et délivre en sortie après traitement par ladite couche, des données de sortie (« features » en anglais).

La couche de convolution correspond généralement à un ensemble de produits scalaires entre les sorties de la couche précédente et les poids de ladite couche. Elle constitue généralement la première couche d'un réseau de neurones convolutionnel.

Par « poids », qui est un terme dont la signification dans le domaine des réseaux de neurones est bien connue de l'homme du métier, on entend des paramètres de neurones configurables pour obtenir de bonnes données de sortie.

Le but de la couche de convolution est de repérer la présence d'un ensemble de données spécifiques dans les images reçues en entrée. Pour cela, on réalise un filtrage par convolution. Le principe est de faire glisser une fenêtre représentant les données à détecter, et de calculer le produit de convolution entre la fenêtre et chaque portion de l'image balayée.

La fenêtre de filtrage est connue par l'homme du métier sous le terme de « noyau de convolution » et sous forme de matrice par exemple un noyau de 3x3 poids.

On obtient pour chaque produit de convolution, des données de sortie indiquant où se situent les données spécifiques sur l'image.

La couche de mise en commun est souvent placée entre deux couches de convolution. Elle reçoit en entrée les données de sortie de la couche de convolution à qui on applique une opération de «pooling» qui consiste à réduire la taille des données tout en préservant leurs caractéristiques importantes. Elle permet de réduire le nombre de paramètres et de calculs dans le réseau. On améliore par conséquent l'efficacité dudit réseau.

La forme la plus courante est une couche de mise en commun avec des fenêtres de filtrage sous forme de matrice, par exemple une matrice 2x2.

La couche entièrement connectée constitue la dernière couche d'un réseau de neurones convolutif ou non convolutif. Elle permet de classifier les données d'entrée du réseau de neurones.

Les architectures typiques de réseaux de neurones empilent quelques paires de couches de convolution et couches non-linéaires puis ajoutent une couche de mise en commun et répètent ce schéma jusqu'à obtenir des données de sortie de taille suffisamment petite, puis terminent par une ou plusieurs couches entièrement connectées.

Aujourd'hui, les réseaux de neurones sont de plus en plus complexes et requièrent une grande puissance de calcul.

L'instruction par seconde (« Instructions Per Second » en anglais) est une unité de mesure de la performance d'un système par exemple un microprocesseur.

Plus la configuration du réseau de neurones est complexe, plus le nombre d'instructions exécutées par le système par seconde diminue.

Il existe donc un besoin de réduire la charge de calcul par exemple d'un microprocesseur traitant les données reçues ou créées par un réseau de neurones à convolution.

Selon un aspect, il est proposé un procédé de réduction de la charge de calcul d'une unité de calcul, par exemple un microprocesseur, traitant un ensemble initial de données par un réseau de neurones à convolution, ledit ensemble initial étant stocké dans une mémoire initiale selon une première et une deuxième directions orthogonales, ledit réseau comprenant au moins une couche de convolution suivie par au moins une couche de mise en commun, ledit traitement comprenant un premier filtrage de l'ensemble initial de données par ladite au moins une couche de convolution en utilisant une première fenêtre glissante selon la première direction, chaque glissement de ladite première fenêtre produisant un premier ensemble de données, et un deuxième filtrage des premiers ensembles de données par ladite au moins une couche de mise en commun en utilisant une deuxième fenêtre glissante selon la deuxième direction.

La combinaison de ces deux filtrages contribue à la réduction de la charge de calcul de l'unité de calcul.

« Par mémoire initiale » on entend par exemple une mémoire volatile par exemple une mémoire RAM (pour « Random Access Memory »).

La première fenêtre de filtrage est ici une fenêtre réalisant un filtrage par convolution. Ladite première fenêtre de filtrage est caractéristique de la couche de convolution.

La deuxième fenêtre de filtrage permet d'appliquer l'opération de « pooling » sur les données de sorties obtenues par la première fenêtre filtrage. Ladite deuxième fenêtre de filtrage est caractéristique de la couche de mise en commun. La deuxième fenêtre glissante a une dimension N comptée selon la première direction, le premier filtrage comprenant N-1 glissements de ladite première fenêtre glissante selon la première direction et, un premier stockage de N premiers ensembles de données dans une première mémoire temporaire.

Par « première mémoire temporaire » on entend par exemple une mémoire tampon (couramment désignée par le terme anglais « buffer »).

Chaque glissement de la première fenêtre filtrage permet d'obtenir un premier ensemble de données de sortie. Chaque premier ensemble est stocké sur une ligne de la première mémoire temporaire qui comprend N lignes, N représentant la hauteur de la deuxième fenêtre glissante.

Selon un mode de mise en œuvre, l'ensemble initial de données est stocké matriciellement selon des lignes et des colonnes, la succession des lignes s'étendant selon la première direction, par exemple la direction verticale, et la succession des colonnes s'étendant selon la deuxième direction par exemple la direction horizontale, chaque ligne individuelle s'étendant selon la deuxième direction et chaque colonne individuelle s'étendant selon la première direction.

Selon un mode de mise en œuvre, la première fenêtre de glissement glisse par pas selon la première direction et à chaque pas, parcourt la ligne correspondante. Le pas peut être quelconque. Ainsi la première fenêtre de glissement peut glisser ligne par ligne ou bien sauter des lignes.

Selon un mode de mise en œuvre, le deuxième filtrage comprend des glissements de ladite deuxième fenêtre glissante, selon la deuxième direction, sur ladite première mémoire temporaire stockant les N premiers ensembles de données, chaque glissement produisant un deuxième ensemble de données, ledit deuxième filtrage comprenant un deuxième stockage de M deuxièmes ensembles de données dans une deuxième mémoire temporaire.

Par « deuxième mémoire temporaire » on entend par exemple une mémoire tampon (couramment désignée par le terme anglais «buffer »).

Autrement dit, chaque glissement de la deuxième fenêtre glissante sur ladite première mémoire temporaire comportant N premiers ensembles de données, produit un deuxième ensemble de données.

Chaque deuxième ensemble de données représente les données de sortie de ladite couche de mise en commun.

Le premier stockage comprend un remplissage circulaire de ladite première mémoire temporaire par le premier ensemble de données produit à chaque glissement de la première fenêtre glissante.

Le plus ancien premier ensemble de données est remplacé par le plus récent premier ensemble de données.

Selon un mode de mise en œuvre, le deuxième filtrage est effectué après un nombre de remplissages circulaires de ladite première mémoire temporaire.

Par exemple, on peut effectuer le deuxième filtrage après deux glissements successifs de la première fenêtre glissante qui vient de produire deux nouveaux premiers ensembles de données.

Selon un mode de mise en œuvre, le premier filtrage et le deuxième filtrage se succèdent jusqu'au traitement de toutes les données de l'ensemble initial.

Selon un mode de mise en œuvre, ledit réseau de neurones comprend au moins une couche non-linéaire entre ladite au moins une couche de convolution et ladite au moins une couche de mise en commun.

Selon un mode de mise en œuvre, ledit réseau de neurones est défini par des paramètres implémenté en virgule flottante ou en virgule fixe.

Par « virgule flottante », on entend un nombre réel représenté par un signe, une mantisse et un exposant.

Par « virgule fixe », on entend un nombre qui possède un nombre fixe de bits après la virgule.

Par « paramètres » on entend par exemple les poids du réseau de neurones et les données définissant chaque couche du réseau.

Selon un autre aspect, il est proposé un dispositif comprenant une mémoire initiale destinée à stocker un ensemble initial de données selon une première et une deuxième directions orthogonales, et une première mémoire destinée à stocker des paramètres définissant un réseau de neurones à convolution configuré pour traiter l'ensemble initial de données, ledit réseau comprenant au moins une couche de convolution suivie par au moins une couche de mise en commun, et une unité de calcul, par exemple un microprocesseur, configurée pour effectuer les opérations des différentes couches du réseau de neurones, ladite au moins une couche de convolution étant configurée pour effectuer un premier filtrage de l'ensemble initial des données en utilisant une première fenêtre glissante selon la première direction de façon à produire un premier ensemble de données à chaque glissement, et ladite au moins une couche de mise en commun étant configurée pour effectuer un deuxième filtrage des premiers ensembles de données en utilisant une deuxième fenêtre glissante selon la deuxième direction.

La deuxième fenêtre glissante a une dimension N comptée selon la première direction, et dans lequel le dispositif comprend des moyens de traitement configurés pour limiter les glissements de la première fenêtre glissante à N-1 glissements selon la première direction, ledit dispositif comprenant en outre une première mémoire temporaire configurée pour stocker N premiers ensembles de données.

Selon un mode de réalisation, l'ensemble initial de données est stocké matriciellement selon des lignes et des colonnes, la succession des lignes s'étendant selon la première direction, et la succession des colonnes s'étendant selon la deuxième direction, chaque ligne individuelle s'étendant selon la deuxième direction et chaque colonne individuelle s'étendant selon la première direction.

Selon un mode de réalisation, les moyens de traitement sont configurés pour faire glisser la première fenêtre de glissement par pas selon la première direction et pour, à chaque pas, faire parcourir la ligne correspondante à la première fenêtre de glissement.

Selon un mode de réalisation, lesdits moyens de traitement sont configurés pour faire glisser la deuxième fenêtre selon la deuxième direction sur la première mémoire temporaire stockant les N premiers ensembles de données, de façon à produire un deuxième ensemble de données à chaque glissement, ledit dispositif comprenant également une deuxième mémoire temporaire configurée pour stocker M deuxièmes ensembles de données.

Les moyens de traitement sont configurés pour effectuer un remplissage circulaire de la première mémoire temporaire avec les premiers ensembles de données produits lors des glissements de la première fenêtre glissante.

Selon un mode de réalisation, les moyens de traitement sont configurés pour effectuer le deuxième filtrage une fois que la première mémoire a effectué un nombre de remplissages circulaires.

Selon un mode de réalisation, les moyens de traitement sont configurés pour effectuer successivement les premiers et deuxièmes filtrages jusqu'au traitement de toutes les données de l'ensemble initial.

Selon un mode de réalisation, le réseau de neurones comprend au moins une couche non-linéaire entre ladite au moins une couche de convolution et ladite au moins une couche de mise en commun.

Selon un mode de réalisation, les paramètres du réseau de neurones sont implémentés en virgule flottante ou en précision fixe.

Il est également proposé un microcontrôleur comprenant ledit dispositif.

D'autres avantages et caractéristiques de l'invention apparaîtront à la lecture de la description détaillée des modes de mises en œuvre et de réalisation, nullement limitatifs, et des dessins annexés sur lesquels :
[Fig. 1] illustre schématiquement un mode de réalisation de l'invention,
[Fig. 2] illustre schématiquement un mode mise en œuvre et de réalisation de l'invention,
[Fig. 3] illustre schématiquement un mode mise en œuvre et de réalisation de l'invention,
[Fig. 4A] illustre schématiquement un mode mise en œuvre et de réalisation de l'invention,
[Fig. 4B] illustre schématiquement un mode mise en œuvre et de réalisation de l'invention, et
[Fig. 4C] illustre schématiquement un mode mise en œuvre et de réalisation de l'invention.

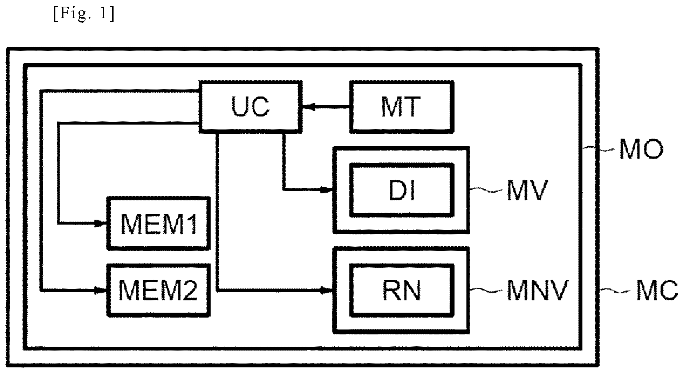

Sur la figure 1, la référence MC désigne un objet électronique par exemple un microcontrôleur, un générateur de code ou tout autre objet pouvant contenir une architecture logicielle embarquée ou matérielle.

L'objet MC comprend un dispositif MO par exemple un module comprenant une mémoire initiale MV par exemple une mémoire volatile RAM (pour « Random Access Memory ») configurée pour stocker un ensemble initial de données DI.

Le dispositif MO comprend également une mémoire non-volatile MNV par exemple une mémoire ROM (pour « Read-Only Memory » en anglais) destinée à stocker les paramètres définissant un réseau de neurones à convolution RN.

Par « paramètres » on entend les poids du réseau de neurones et les données définissant chaque couche du réseau de neurones.

Lesdits paramètres peuvent être implémentés en virgule fixe ou en virgule flottante.

Par « virgule flottante », on entend un nombre réel représenté par un signe, une mantisse et un exposant.

Par « virgule fixe », on entend un nombre qui possède un nombre fixe de bits après la virgule.

Cette configuration permet de traiter de manière spécifique les données DI stockées dans la mémoire initiale MV et délivrer des données de sortie.

Pour ce faire, le dispositif MO comprend une unité de calcul UC par exemple un microprocesseur configuré pour effectuer les opérations définies par chaque couche du réseau de neurones RN.

L'unité de calcul UC est par conséquent couplée à la mémoire non-volatile MNV pour extraire lesdits paramètres de chaque couche du réseau de neurones RN. Elle est également couplée à la mémoire volatile MV pour extraire l'ensemble initial de données DI sur lesquels le traitement s'effectuera.

Le dispositif MO comprend une première mémoire temporaire MEM1 et une deuxième mémoire temporaire MEM2.

Par « temporaire » on entend une mémoire tampon (couramment désignée par le terme anglais « buffer »).

La première et la deuxième mémoires temporaires MEM1 et MEM2 sont couplées à l'unité de calcul UC.

La première et la deuxième mémoires temporaires MEM1 et MEM2 sont configurées pour stocker des données délivrées par l'unité de calcul UC.

Le dispositif MO comprend des moyens de traitement MT couplées à l'unité de calcul UC et configurés pour contrôler le nombre d'opérations à effectuer pour chaque couche et par conséquent, contrôler le stockage des données délivrées par l'unité de calcul UC.

Les moyens de traitement peuvent être réalisés par exemple par un module logiciel au sein du microprocesseur et/ou par des circuits logiques spécifiques.

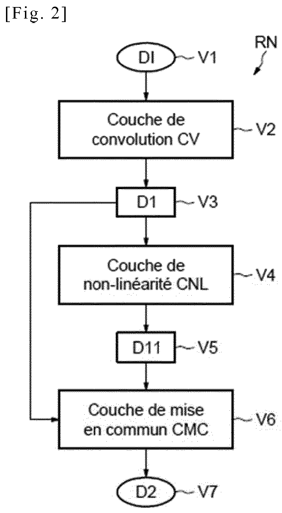

La figure 2 illustre schématiquement les différentes étapes de traitement de l'ensemble initial de données DI par les couches du réseau de neurones RN.

Le réseau de neurones RN comprend au moins une couche de convolution CV suivie d'au moins une couche de mise en commun CMC.

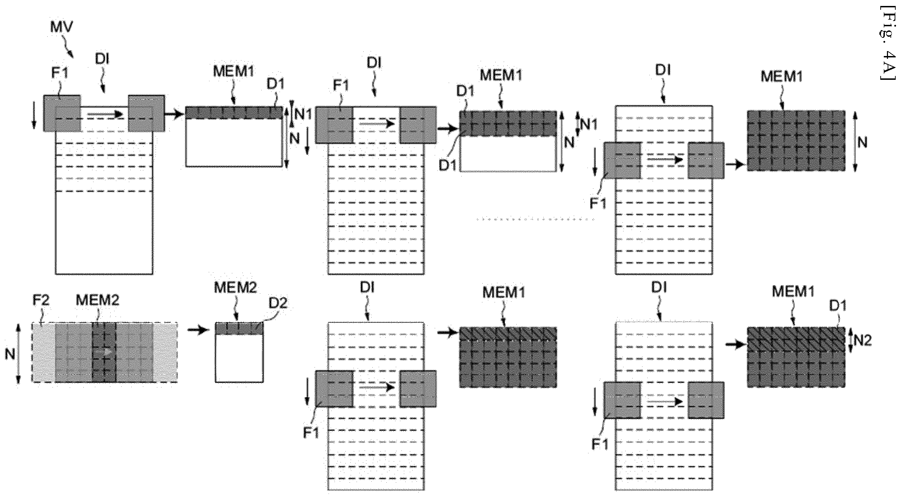

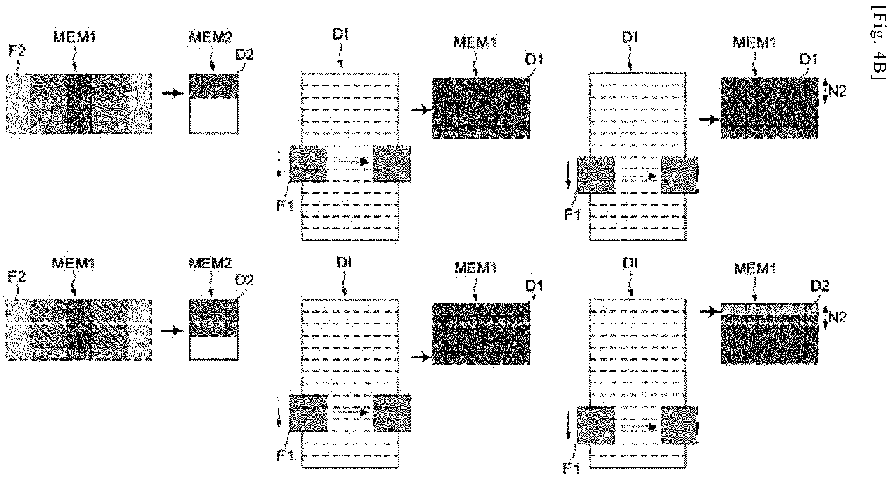

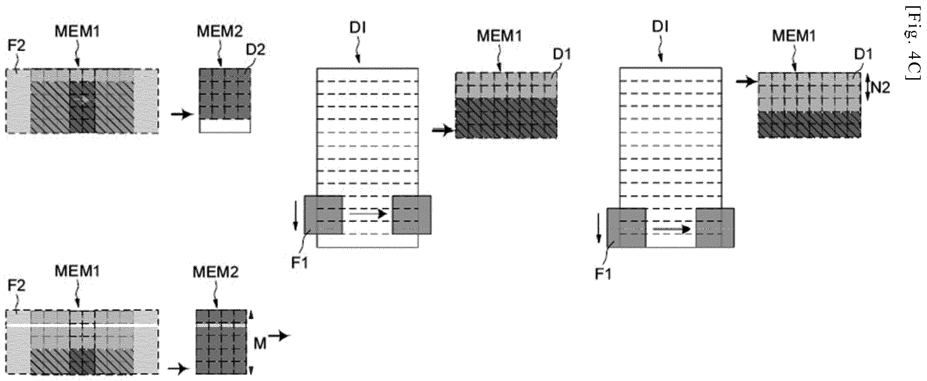

La couche de convolution CV permet de repérer la présence d'un ensemble de données spécifiques dans l'ensemble initial de données DI reçu dans l'étape V1. Pour cela, la couche de convolution réalise un filtrage par convolution dans l'étape V2 en utilisant une première fenêtre glissante F1 illustrée dans les figures 4A, 4B et 4C.

La première fenêtre glissante F1 permet de calculer le produit de convolution entre la fenêtre et chaque portion de l'ensemble initial de données DI.

L'ensemble initial de données DI se présente comme une matrice ayant des lignes et des colonnes, la succession des lignes s'étendant selon une première direction et donc verticalement et la succession des colonnes s'étendant selon une deuxième direction c'est-à-dire horizontalement.

La première fenêtre glissante F1 glisse selon la première direction et donc verticalement, tout en parcourant à chaque glissement une ligne de l'ensemble initial de données DI. Chaque glissement produit un premier ensemble de données D1 dans l'étape V3.

Par « glissement » on entend ici que la première fenêtre glissante F1 parcourt chaque ligne de l'ensemble initial de données DI.

Chaque premier ensemble de données D1 est stocké dans la première mémoire temporaire MEM1.

Le réseau de neurones peut comprendre une couche non-linéaire CNL, qui permet d'améliorer la pertinence du résultat. Elle prend en entrée dans l'étape V4 un premier ensemble de données D1 et produit un ensemble de données intermédiaire D11 dans l'étape V5.

Les ensembles de données intermédiaires D11 peuvent être mis dans une mémoire temporaire intermédiaire.

La couche non-linéaire CNL étant optionnelle, les premiers ensembles de données D1 peuvent être envoyés directement à la couche de mise en commun CMC.

La couche de mise en commun CMC reçoit donc les premiers ensembles de données D1 à qui on applique dans l'étape V6 une opération de « pooling » qui consiste à réduire la taille des ensembles de données D1 tout en préservant leurs caractéristiques importantes.

Pour cela, la couche de mise en commun CMC utilise une deuxième fenêtre glissante F2 illustrée dans les figures 4A, 4B et 4C.

La deuxième fenêtre glissante F2 glisse selon la deuxième direction et produit un premier ensemble de données D2 dans l'étape V7.

Chaque deuxième ensemble de données D2 est stocké dans la deuxième mémoire temporaire MEM2.

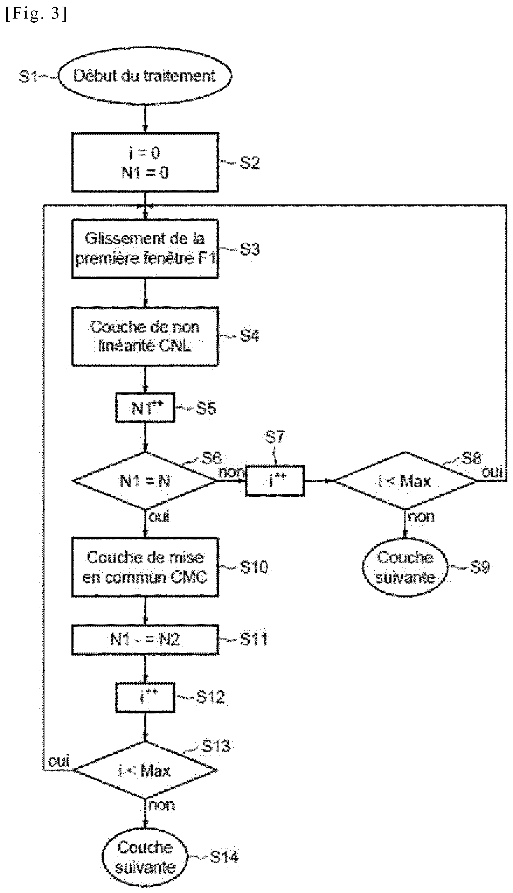

La figure 3 illustre schématiquement un algorithme implémenté dans les moyens de traitement MT.

Ledit algorithme permet aux moyens de traitement MT de contrôler le nombre d'opérations à effectuer pour chaque couche et par conséquent, contrôler le stockage des données délivrées par l'unité de calcul UC.

Lorsque les moyens de traitement MT détectent la présence d'une couche de convolution CV dans l'étape S1, ils initialisent dans l'étape S2 une variable i à 0 et une variable N1 également à 0.

La variable i représente un index parcourant la liste des lignes générées en sortie de la couche de convolution.

La variable N1 représente le nombre de premiers ensembles D1 stockés dans la première mémoire temporaire MEM1.

La première et la deuxième mémoire temporaire MEM1 et MEM2 sont vides à l'étape S2.

Dans l'étape S3, la première fenêtre glissante F1 glisse selon la première direction et donc verticalement, tout en parcourant à chaque glissement une ligne de l'ensemble initial de données DI. Chaque glissement produit un premier ensemble de données D1.Ledit premier ensemble de données D1 peut être envoyé à la couche de non linéarité CNL dans l'étape S4 qui produit un ensemble intermédiaire de données D11. Cette étape S4 est optionnelle.

Dans l'étape S5, on incrémente la valeur de la variable N1 de 1 car on vient de stocker dans la mémoire temporaire MEM1 un premier ensemble de données D1.

Dans l'étape S6, on réalise une première comparaison entre la variable N1 et une troisième variable N représentative de la dimension de la deuxième fenêtre glissante F2 et du nombre maximum de premiers ensembles de données D1 que la première mémoire temporaire MEM1 peut contenir.

Si la valeur de la variable N1 est égale à la valeur N, cela veut dire que la première mémoire temporaire MEM1 comprend N premiers ensembles de données D1. Elle ne peut plus donc en contenir davantage.

Si la valeur de la variable N1 est inférieure à la valeur N, cela veut dire que la première mémoire temporaire MEM1 peut stocker davantage de premiers ensembles de données D1.

Etant donné que dans cet exemple, on a stocké uniquement un premier ensemble de données D1, la valeur de la variable N1 est inférieure à la valeur N et donc on passe à l'étape S7 dans laquelle on incrémente la valeur de la variable i de 1.

Dans l'étape S8, on réalise une deuxième comparaison entre la valeur de la variable i et une variable Max représentative du nombre maximal des lignes générées en sortie de la couche de convolution.

Si la valeur de la variable i est supérieure à la valeur de la variable Max, cela veut dire qu'on a parcouru toutes les lignes générées. Les moyens de traitement MT passe à la couche de convolution CV suivante s'il en reste dans l'étape S9.

Dans le cas contraire, on réitère les étapes S3, S4 et S5 jusqu'à ce que la valeur de la variable N1 soit égale à la valeur de la variable N.

On passe ensuite à l'étape S10 dans laquelle la couche de mise en commun CMC utilise la deuxième fenêtre de filtrage F2 selon la deuxième direction sur les N premiers ensembles de données D1 contenus dans la première mémoire temporaire MEM1 et produit un deuxième ensemble de données D2.

Dans l'étape S11, on soustrait à la valeur de la variable N1 un nombre défini N2 qui représente le nombre de glissements de la première fenêtre F1 à réaliser avant d'effectuer un deuxième filtrage.

La valeur de la variable N1 est égale à N1-N2.

Dans l'étape S12, on incrémente la valeur de la variable i de 1 et on vérifie dans l'étape S13 si la valeur de la variable i est inférieure à la valeur de la variable Max.

Si non, on passe dans l'étape S14 à la couche de convolution CV suivante qui utilisera une autre première fenêtre de filtrage F1 et parcourra l'ensemble initial de données DI.

Si oui, on continue de filtrer ledit ensemble initial de données D1 avec la première fenêtre de filtrage N2 fois, c'est-à-dire jusqu'à ce que N1 soit égal à N.

Les N2 premiers ensembles de données D1 écrasent les plus anciens premiers ensembles de données D1 dans la première mémoire temporaire MEM1. L'unité de calcul UC effectue donc un remplissage circulaire.

La deuxième fenêtre glissante F2 réalise un glissement sur ladite première mémoire temporaire MEM1 comprenant les deux nouveaux premiers ensembles D1 et produit un deuxième ensemble D2.

Cet algorithme est réitéré jusqu'au traitement de toutes les lignes de l'ensemble initial de données DI.

Les figures 4A, 4B et 4C illustrent schématiquement la mise en œuvre dudit algorithme.

Dans la figure 4A, la première fenêtre glissante F1 glisse une première fois sur la première ligne de l'ensemble initial de données DI et produit un premier ensemble de données D1 qui sera stocké dans la première mémoire temporaire MEM1. N1 est maintenant égal à 1.

La première fenêtre F1 glisse une deuxième fois sur la deuxième ligne de l'ensemble initial de données DI et produit un premier ensemble de données D1 qui sera stocké dans la première mémoire temporaire MEM1. N2 est maintenant égal à 2.

On réitère le glissement jusqu'à ce que N1 soit égal à N ici 5. N représente la hauteur de la deuxième fenêtre glissante.

La première mémoire temporaire contient donc N premiers ensembles de données D1.

La deuxième fenêtre glissante F2 glisse selon la deuxième direction sur la première mémoire temporaire MEM1 et produit un deuxième ensemble de données D2 qui sera stocké dans la deuxième mémoire temporaire MEM2.

On soustrait N2 à N1 qui est ici égal à 2. N1 est donc égal à 3.

La première fenêtre glissante F1 glisse une sixième fois sur la sixième ligne de l'ensemble initial de données DI et produit un premier ensemble de données D1. N1 vaut 4.

Le premier ensemble de données D1 écrase le plus ancien premier ensemble de données D1.

La première fenêtre F1 glisse une septième fois sur la septième ligne de l'ensemble initial de données DI et produit un premier ensemble de données D1. N1 vaut 5.

Le premier ensemble de données D1 écrase le plus ancien premier ensemble de données D1.

Il est à noter que la première fenêtre F1 peut par exemple ne pas glisser sur chaque ligne de l'ensemble initial de données DI. La première fenêtre F1 peut avoir un pas de glissement (« stride » en anglais).

Dans la figure 4B, la deuxième fenêtre glissante F2 glisse sur la première mémoire temporaire MEM1 contenant les deux nouveaux premiers ensembles de données D1 et produit un deuxième ensemble de données D2 qui sera stocké dans la deuxième mémoire temporaire MEM2.

On soustrait N2 à N1 qui est ici égal à 2. N1 est donc égal à 3.

On réitère les mêmes étapes dans la figure 3B et 3C jusqu'à ce qu'il n'y ait plus de lignes à traiter dans ledit ensemble initial de données DI.

## Revendications

1. Procédé de réduction de la charge de calcul d'une unité de calcul (UC) destinée à traiter un ensemble initial de données (DI) par un réseau de neurones à convolution (RN), ledit ensemble initial (DI) étant stocké dans une mémoire initiale (MV) selon une première et une deuxième directions orthogonales, ledit réseau (RN) comprenant au moins une couche de convolution (CV) suivie par au moins une couche de mise en commun (CMC), ledit traitement comprenant un premier filtrage de l'ensemble initial de données (DI) par ladite au moins une couche de convolution (CV) en utilisant une première fenêtre glissante (F1) selon la première direction, chaque glissement de ladite première fenêtre (F1) produisant un premier ensemble de données (D1), et un deuxième filtrage des premiers ensembles de données (D1) par ladite au moins une couche de mise en commun (CMC) en utilisant une deuxième fenêtre glissante (F2) selon la deuxième direction,
dans lequel la deuxième fenêtre glissante (F2) a une dimension N comptée selon la première direction, le premier filtrage comprenant N-1 glissements de ladite première fenêtre glissante (F1) selon la première direction et, un premier stockage de N premiers ensembles de données (D1) dans une première mémoire temporaire (MEM1),
et dans lequel ledit premier stockage comprend un remplissage circulaire de ladite première mémoire temporaire (MEM1) par le premier ensemble de données (D1) produit à chaque glissement de la première fenêtre glissante (F1).

2. Procédé selon la revendication 1, dans lequel l'ensemble initial de données (DI) est stocké matriciellement selon des lignes et des colonnes, la succession des lignes s'étendant selon la première direction, et la succession des colonnes s'étendant selon la deuxième direction, chaque ligne individuelle s'étendant selon la deuxième direction et chaque colonne individuelle s'étendant selon la première direction.

3. Procédé selon la revendication 1 ou 2, dans lequel le deuxième filtrage comprend des glissements de ladite deuxième fenêtre glissante (F2), selon la deuxième direction, sur ladite première mémoire temporaire (MEM1) stockant les N premiers ensembles de données (D1), chaque glissement produisant un deuxième ensemble de données (D2), ledit deuxième filtrage comprenant un deuxième stockage de M deuxièmes ensembles de données (D2) dans une deuxième mémoire temporaire (MEM2).

4. Procédé selon la revendication 2 ou les revendications 2 et 3, dans lequel la première fenêtre de glissement glisse par pas selon la première direction et à chaque pas, parcourt la ligne correspondante.

5. Procédé selon la revendication 4, dans lequel le deuxième filtrage est effectué après un nombre (N2) de remplissages circulaires de ladite première mémoire (MEM1).

6. Procédé selon l'une des revendications précédentes, dans lequel le premier filtrage et le deuxième filtrage se succèdent jusqu'au traitement de toutes les données de l'ensemble initial (DI).

7. Procédé selon l'une des revendications précédentes, dans lequel ledit réseau de neurones (RN) comprend au moins une couche non-linéaire (CNL) entre ladite au moins une couche de convolution (CV) et ladite au moins une couche de mise en commun (CMC).

8. Procédé selon l'une des revendications précédentes, dans lequel ledit réseau de neurones (RN) est défini par des paramètres implémenté en virgule flottante ou en précision fixe.

9. Dispositif (MO) comprenant une mémoire initiale (MV) destinée à stocker un ensemble initial de données (DI) selon une première et une deuxième directions orthogonales, et une première mémoire destinée à stocker des paramètres définissant un réseau de neurones à convolution (RN) configuré pour traiter l'ensemble initial de données (DI), ledit réseau (RN) comprenant au moins une couche de convolution (CV) suivie par au moins une couche de mise en commun (CMC), et une unité de calcul (UC) configuré pour effectuer les opérations des différentes couches du réseau de neurones, ladite au moins une couche de convolution (CV) étant configurée pour effectuer un premier filtrage de l'ensemble initial des données (DI) en utilisant une première fenêtre glissante (F1) selon la première direction de façon à produire un premier ensemble de données (D1) à chaque glissement, et ladite au moins une couche de mise en commun (CMC) étant configurée pour effectuer un deuxième filtrage des premiers ensembles de données (D1) en utilisant la deuxième fenêtre glissante (F2) selon la deuxième direction,
dans lequel la deuxième fenêtre glissante (F2) a une dimension N comptée selon la première direction, le dispositif comprenant des moyens de traitement (MT) configurés pour limiter les glissements de la première fenêtre glissante à N-1 glissements selon la première direction, ledit dispositif (MO) comprenant en outre une première mémoire temporaire (MEM1) configurée pour stocker N premiers ensembles de données (D1),
et dans lequel les moyens de traitement (MT) sont configurés pour effectuer un remplissage circulaire de la première mémoire temporaire (MEM1) avec les premiers ensembles de données (D1) produits lors des glissements de la première fenêtre glissante (F1)..

10. Dispositif (MO) selon la revendication 9, dans lequel l'ensemble initial de données (DI) est stocké matriciellement selon des lignes et des colonnes, la succession des lignes s'étendant selon la première direction, et la succession des colonnes s'étendant selon la deuxième direction, chaque ligne individuelle s'étendant selon la deuxième direction et chaque colonne individuelle s'étendant selon la première direction.

11. Dispositif (MO) selon la revendication 10, dans lequel lesdits moyens de traitement (MT) sont configurés pour faire glisser la deuxième fenêtre (F2) selon la deuxième direction sur la première mémoire temporaire (MEM1) stockant les N premiers ensembles de données (D1), de façon à produire un deuxième ensemble de données (D2) à chaque glissement, ledit dispositif (MO) comprenant également une deuxième mémoire temporaire (MEM2) configurée pour stocker M deuxièmes ensembles de données (D2).

12. Dispositif selon l'une quelconque des revendications 10 et 11, dans lequel les moyens de traitement sont configurés pour faire glisser la première fenêtre de glissement par pas selon la première direction et pour, à chaque pas, faire parcourir la ligne correspondante à la première fenêtre de glissement.

13. Dispositif (MO) selon la revendication 12, dans lequel les moyens de traitement (MT) sont configurés pour effectuer le deuxième filtrage une fois que la première mémoire (MEM1) a effectué un nombre (N2) de remplissages circulaires.

14. Dispositif (MO) selon l'une des revendications 9 à 13, dans lequel les moyens de traitement (MC) sont configurés pour effectuer successivement les premiers et deuxièmes filtrages jusqu'au traitement de toutes les données de l'ensemble initial (DI).

15. Dispositif (MO) selon l'une des revendications 9 à 14, dans lequel ledit réseau de neurones (RN) comprend au moins une couche non-linéaire (CNL) entre ladite au moins une couche de convolution (CV) et ladite au moins une couche de mise en commun (CMC).

16. Dispositif (MO) selon l'une des revendications 9 à 15, dans lequel les paramètres du réseau de neurones (RN) sont implémentés en virgule flottante ou en précision fixe.

17. Microcontrôleur (MC) comprenant un dispositif (MO) selon l'une des revendications 9 à 16.

## Patentansprüche

1. Verfahren zum Reduzieren der Rechenlast einer Recheneinheit (UC), die dazu bestimmt ist, einen ursprünglichen Datensatz (DI) durch ein neuronales Konvolutionsnetzwerk (RN) zu verarbeiten, wobei der ursprüngliche Datensatz (DI) in einem ursprünglichen Speicher (MV) entlang einer ersten und zweiten orthogonalen Richtung gespeichert ist, wobei das Netzwerk (RN) mindestens eine Konvolutionsschicht (CV), gefolgt von mindestens einer Zusammenlegungsschicht (CMC) umfasst, wobei die Verarbeitung ein erstes Filtern des ursprünglichen Datensatzes (DI) durch die mindestens eine Konvolutionsschicht (CV) unter Verwendung eines ersten gleitenden Fensters (F1) in der ersten Richtung, wobei jedes Gleiten des ersten Fensters (F1) einen ersten Datensatz (D1) erzeugt, und ein zweites Filtern der ersten Datensätze (D1) durch die mindestens eine Zusammenlegungsschicht (CMC) unter Verwendung eines zweiten gleitenden Fensters (F2) in der zweiten Richtung umfasst,
wobei das zweite gleitende Fenster (F2) eine entlang der ersten Richtung gezählte Dimension N aufweist, wobei die erste Filterung N-1 mal Gleiten des ersten gleitenden Fensters (F1) entlang der ersten Richtung und eine erste Speicherung von N ersten Datensätzen (D1) in einem ersten temporären Speicher (MEM1) umfasst,
und wobei das erste Speichern ein kreisförmiges Auffüllen des ersten temporären Speichers (MEM1) durch den ersten Datensatz (D1) umfasst, der bei jedem Gleiten des ersten gleitenden Fensters (F1) erzeugt wird.

2. Verfahren nach Anspruch 1, wobei der ursprüngliche Datensatz (DI) matrixförmig in Zeilen und Spalten gespeichert wird, wobei sich die Folge von Zeilen entlang der ersten Richtung erstreckt und sich die Folge von Spalten entlang der zweiten Richtung erstreckt, wobei sich jede einzelne Zeile entlang der zweiten Richtung erstreckt und sich jede einzelne Spalte entlang der ersten Richtung erstreckt.

3. Verfahren nach Anspruch 1 oder 2, wobei die zweite Filterung Gleitbewegungen des zweiten gleitenden Fensters (F2) entlang der zweiten Richtung über den ersten temporären Speicher (MEM1) umfasst, der die ersten N Datensätze (D1) speichert, wobei jedes Gleiten einen zweiten Datensatz (D2) erzeugt, wobei die zweite Filterung eine zweite Speicherung von M zweiten Datensätzen (D2) in einem zweiten temporären Speicher (MEM2) umfasst.

4. Verfahren nach Anspruch 2 oder den Ansprüchen 2 und 3, wobei das erste gleitende Fenster schrittweise entlang der ersten Richtung gleitet und bei jedem Schritt die entsprechende Linie zurücklegt.

5. Verfahren nach Anspruch 4, wobei die zweite Filterung nach einer Anzahl (N2) von kreisförmigen Auffüllungen des ersten Speichers (MEM1) durchgeführt wird.

6. Verfahren nach einem der vorstehenden Ansprüche, wobei die erste Filterung und die zweite Filterung bis zu der Verarbeitung aller Daten des ursprünglichen Satzes (DI) aufeinanderfolgen.

7. Verfahren nach einem der vorstehenden Ansprüche, wobei das neuronale Netzwerk (RN) mindestens eine nichtlineare Schicht (CNL) zwischen der mindestens einen Konvolutionsschicht (CV) und der mindestens einen Zusammenlegungsschicht (CMC) umfasst.

8. Verfahren nach einem der vorstehenden Ansprüche, wobei das neuronale Netzwerk (RN) durch Parameter definiert ist, die in Fließkomma oder Festkomma implementiert sind.

9. Vorrichtung (MO), die einen ursprünglichen Speicher (MV) umfasst, der dazu bestimmt ist, einen ursprünglichen Datensatz (DI) entlang einer ersten und zweiten orthogonalen Richtung zu speichern, und einen ersten Speicher, der dazu bestimmt ist, Parameter zu speichern, die ein neuronales Konvolutionsnetzwerk (RN) definieren, das konfiguriert ist, um den ursprünglichen Datensatz (DI) zu verarbeiten, wobei das Netzwerk (RN) mindestens eine Konvolutionsschicht (CV), gefolgt von mindestens einer Zusammenlegungsschicht (CMC), und eine Recheneinheit (UC) umfasst, die konfiguriert ist, um die Operationen der verschiedenen Schichten des neuronalen Netzwerks durchzuführen, wobei die mindestens eine Konvolutionsschicht (CV) konfiguriert ist, um eine erste Filterung des ursprünglichen Datensatzes (DI) unter Verwendung eines ersten gleitenden Fensters (F1) entlang der ersten Richtung durchzuführen, um bei jedem Gleiten einen ersten Datensatz (D1) zu erzeugen, und die mindestens eine Zusammenlegungsschicht (CMC) konfiguriert ist, um eine zweite Filterung der ersten Datensätze (D1) unter Verwendung des zweiten gleitenden Fensters (F2) entlang der zweiten Richtung durchzuführen,
wobei das zweite gleitende Fenster (F2) eine entlang der ersten Richtung gezählte Dimension N aufweist, wobei die Vorrichtung Verarbeitungsmittel (MT) umfasst, die konfiguriert sind, um die Gleitbewegungen des ersten gleitenden Fensters auf N-1 Mal Gleiten entlang der ersten Richtung zu begrenzen, wobei die Vorrichtung (MO) weiter einen ersten temporären Speicher (MEM1) umfasst, der konfiguriert ist, um N erste Datensätze (D1) zu speichern,
und wobei die Verarbeitungsmittel (MT) konfiguriert sind, um ein kreisförmiges Auffüllen des ersten temporären Speichers (MEM1) mit den ersten Datensätzen (D1) durchzuführen, die bei Gleitbewegungen des ersten gleitenden Fensters (F1) erzeugt werden.

10. Vorrichtung (MO) nach Anspruch 9, wobei der ursprüngliche Datensatz (DI) matrixförmig in Zeilen und Spalten gespeichert wird, wobei sich die Folge von Zeilen entlang der ersten Richtung erstreckt und sich die Folge von Spalten entlang der zweiten Richtung erstreckt, wobei sich jede einzelne Zeile entlang der zweiten Richtung erstreckt und sich jede einzelne Spalte entlang der ersten Richtung erstreckt.

11. Vorrichtung (MO) nach Anspruch 10, wobei die Verarbeitungsmittel (MT) konfiguriert sind, um das zweite Fenster (F2) entlang der zweiten Richtung über den ersten temporären Speicher (MEM1) gleiten zu lassen, der die ersten N Datensätze (D1) speichert, um bei jedem Gleiten einen zweiten Datensatz (D2) zu erzeugen, wobei die Vorrichtung (MO) auch einen zweiten temporären Speicher (MEM2) umfasst, der konfiguriert ist, um M zweite Datensätze (D2) zu speichern.

12. Vorrichtung nach einem der Ansprüche 10 und 11, wobei die Verarbeitungsmittel konfiguriert sind, um das erste gleitende Fenster schrittweise entlang der ersten Richtung gleiten zu lassen, und um bei jedem Schritt die dem ersten gleitenden Fenster entsprechende Linie zurückzulegen.

13. Vorrichtung (MO) nach Anspruch 12, wobei die Verarbeitungsmittel (MT) konfiguriert sind, um die zweite Filterung durchzuführen, nachdem der erste Speicher (MEM1) eine Anzahl (N2) von kreisförmigen Auffüllungen durchgeführt hat.

14. Vorrichtung (MO) nach einem der Ansprüche 9 bis 13, wobei die Verarbeitungsmittel (MC) konfiguriert sind, um nacheinander die ersten und zweiten Filterungen bis zu der Verarbeitung aller Daten des ursprünglichen Satzes (DI) durchzuführen.

15. Vorrichtung (MO) nach einem der Ansprüche 9 bis 14, wobei das neuronale Netzwerk (RN) mindestens eine nichtlineare Schicht (CNL) zwischen der mindestens einen Konvolutionsschicht (CV) und der mindestens einen Zusammenlegungsschicht (CMC) umfasst.

16. Vorrichtung (MO) nach einem der Ansprüche 9 bis 15, wobei die Parameter des neuronalen Netzwerks (RN) als Fließkomma oder Festkomma implementiert sind.

17. Mikrosteuereinheit (MC), die eine Vorrichtung (MO) nach einem der Ansprüche 9 bis 16 umfasst.

## Claims

1. A method for reducing the computational load of a computing unit (UC) intended to process an initial dataset (DI) by a convolutional neural network (RN), the initial dataset (DI) being stored in an initial memory (MV) along a first and a second orthogonal directions, said network (RN) comprising at least one convolutional layer (CV) followed by at least one pooling layer (CMC), said processing comprising a first filtration of the initial dataset (DI) by the at least one convolutional layer (CV) using a first sliding window (F1) along the first direction, each sliding of the said first window (F1) producing a first dataset (D1), and a second filtration of the first datasets (D1) by at least one pooling layer (CMC) using a second sliding window (F2) along the second direction,
wherein the second sliding window (F2) has a dimension N counted along the first direction, the first filtration comprising N-1 slidings of the first sliding window (F1) along the first direction, and a first storage of N first datasets (D1) in a first temporary memory (MEM1),
and wherein said first storage includes a circular filling of the said first temporary memory (MEM1) by the first dataset (D1) produced at each sliding of the first sliding window (F1).

2. The method according to claim 1, wherein the initial dataset (DI) is stored in a matrix format with rows and columns, the succession of rows extending along the first direction, and the succession of columns extending along the second direction, each individual row extending along the second direction and each individual column extending along the first direction.

3. The method according to claim 1 or 2, wherein the second filtration comprises slidings of said second sliding window (F2) along the second direction, on said first temporary memory (MEM1) storing the first N datasets (D1), each sliding producing a second dataset (D2), said second filtration including a second storage of M second datasets (D2) in a second temporary memory (MEM2).

4. The method according to claim 2 or claims 2 and 3, wherein the first sliding window slides by steps along the first direction and, at each step, traverses the corresponding line.

5. The method of claim 4, wherein the second filtration is performed after a number (N2) of circular fillings of said first memory (MEM1).

6. The method according to one of the preceding claims, wherein the first filtration and the second filtration succeed each other until all the data from the initial set (DI) have been processed.

7. The method according to one of the preceding claims, wherein the neural network (RN) comprises at least one non-linear layer (CNL) between said at least one convolutional layer (CV) and said at least one pooling layer (CMC).

8. The method according to one of the preceding claims, wherein said neural network (RN) is defined by parameters implemented in floating point or fixed precision.

9. A device (MO) comprising an initial memory (MV) intended to store an initial dataset (DI) along a first and a second orthogonal directions, and a first memory intended to store parameters defining a convolutional neural network (RN) configured to process the initial dataset (DI), said network (RN) comprising at least one convolutional layer (CV) followed by at least one pooling layer (CMC), and a computing unit (UC) configured to perform the operations of the different layers of the neural network, said at least one convolutional layer (CV) being configured to perform a first filtration of the initial dataset (DI) using a first sliding window (F1) along the first direction to produce a first dataset (D1) at each sliding, and said at least one pooling layer (CMC) being configured to perform a second filtration of the first datasets (D1) using a second sliding window (F2) along the second direction,
wherein the second sliding window (F2) has a dimension N counted along the first direction, the device comprising processing means (MT) configured to limit slidings of the first sliding window to N-1 slidings along the first direction, said device (MO) further comprising a first temporary memory (MEM1) configured to store N initial datasets (D1),
and wherein the processing means (MT) are configured to perform a circular filling of the first temporary memory (MEM1) with the first datasets (D1) produced during the slidings of the first sliding window (F1).

10. The device (MO) according to claim 9, wherein the initial dataset (DI) is stored in a matrix format according to rows and columns, the succession of rows extending along the first direction and the succession of columns extending along the second direction, each individual row extending along the second direction and each individual column extending along the first direction.

11. The device (MO) according to claim 10, wherein the processing means (MT) are configured to slide the second window (F2) along the second direction over the first temporary memory (MEM1) storing the first N datasets (D1), so as to produce a second dataset (D2) at each sliding, said device (MO) also comprising a second temporary memory (MEM2) configured to store M second datasets (D2).

12. The device according to any one of claims 10 and 11, wherein the processing means are configured to slide the first sliding window in steps along the first direction and, at each step, to traverse the row corresponding to the first sliding window.

13. The device (MO) according to claim 12, wherein the processing means (MT) are configured to perform the second filtration once the first memory (MEM1) has completed a number (N2) of circular fillings.

14. The device (MO) according to one of claims 9 to 13, wherein the processing means (MC) are configured to successively carry out the first and second filtrations until all the data from the initial set (DI) have been processed.

15. The device (MO) according to one of claims 9 to 14, wherein the neural network (RN) comprises at least one non-linear layer (CNL) between said at least one convolutional layer (CV) and said at least one pooling layer (CMC).

16. The device (MO) according to one of claims 9 to 15, wherein the parameters of the neural network (RN) are implemented in floating point or fixed precision.

17. A microcontroller (MC) comprising a device (MO) according to one claims 9 to 16.
